# EUROPEAN PATENT SPECIFICATION

(11) **EP 3 646 975 B1**
(45) Date of publication and mention of the grant of the patent: **31.07.2024**
(21) Application number: 19205158.9
(22) Date of filing: 24.10.2019
(51) Int. Cl.: B23B 51/02, B23B 41/14

(54) **DRILLING TOOL AND METHOD FOR MANUFACTURING THE SAME**
BOHRWERKZEUG UND VERFAHREN ZU SEINER HERSTELLUNG
OUTIL DE FORAGE ET SON PROCÉDÉ DE FABRICATION

(30) Priority: 31.10.2018 JP 2018204813
(43) Date of publication of application: 06.05.2020
(73) Proprietor: UNION TOOL CO., Tokyo (JP)
(72) Inventor: WATANABE, Masahide, Shinagawa, Tokyo (JP); SATO, Masayasu, Shinagawa, Tokyo (JP)
(74) Representative: Kramer Barske Schmidtchen Patentanwälte PartG mbB

(56) References cited:
- EP-A2- 1 037 724
- WO-A1-2007/041995
- JP-A- 2005 238 349
- JP-A- S 563 117
- JP-A- S 563 118
- US-A1- 2015 245 494

## Description

### BACKGROUND OF INVENTION

### TECHNICAL FIELD

The present invention relates to a drilling tool and a method for manufacturing the same.

### BACKGROUND ART

Recently, printed circuit boards (PCBs) have become lighter, thinner, and smaller, and as a higher degree of electric reliability is required, there is demand for higher heat resistance, greater heat dissipation, and higher rigidity. To meet this demand, organic resin materials of glass-fiber reinforced resins (GFRP), which are constituent materials of PCBs, are being filled with greater amounts of inorganic filler, and glass fibers are being made with higher density.

However, when the amount of inorganic filler or the amount of glass fibers in a PCB is increased, cutting edges of a drill (PCB drill) used to drill the PCB will wear out more readily. When the cutting edges of the drill wear out, problems are presented in that hole position accuracy deteriorates, roughness of inner wall surfaces deteriorates, and the PCB drill breaks.

In view of this, PCB drills are normally covered with various coatings for the purpose of minimizing wear on the cutting edges, preventing any decrease in drilling quality that comes with wear on the cutting edges, and improving tool life (refer to Patent Document 1).

Machines (NC drill presses) used to drill holes in PCBs have a function in which contact between a PCB drill point and a copper foil layer on a PCB surface is electrically sensed (electric conduction is sensed), whereby the contact position between the drill point and the PCB surface is detected and used as a drilling reference position, and drilling depth is controlled on the basis of this drilling reference position. These machines also have the function of performing breakage detection, in which the drill point is assessed to be broken when the aforementioned electric conduction cannot be sensed.

Among coating films used to cover PCB drills, there are those such as diamond cover films that have a high electric resistance value and low electroconductivity, and a PCB drill coated with such a cover film channels electric current less readily than a non-coated drill; therefore, there are cases in which electric conduction between the PCB drill point and the copper foil layer on the PCB surface cannot be sensed.

In these cases, there are occasions in which the drilling depth control cannot be performed satisfactorily and drilling depth (distance from the PCB surface) cannot be managed accurately, or the machine erroneously assesses there to be breakage in the drill and drilling is interrupted.

For example, Patent Document 2 discloses a feature in which boron is added to a polycrystalline diamond cover film to provide electroconductivity to the diamond cover film, but in this case, adhesiveness between the polycrystalline diamond cover film and a cemented carbide making up the base material is known to deteriorate due to increased internal stress (refer to Patent Document 3).

### Prior Art Documents

### Patent Documents

Patent Document 1: Japanese Translation of PCT International Application No. 2009-544481
Patent Document 2: Japanese Laid-open Patent Publication No. 2006-152424
Patent Document 3: International Publication No. 2013/105348 WO 98/56527 A2 discloses a multi-bit drill having an elongated body including a fluted land and a shank. The fluted land includes a plurality of radial grooves of reduced material thickness formed therein to the depth of the flutes. The grooves define discrete segments of the drill. Each segment has a facet which has the relief of a drill tip so that when the exposed drill tip becomes dull, the segment can be broken off at the notch exposing a successive, sharp drill tip.

JP S56 3117 A discloses the preamble of claim 1, it discloses a coated miniature drill made of cemented carbide. A coating on relief surfaces may be removed by grinding after the coating of the entire surface is completed.

### DISCLOSURE OF THE INVENTION

### Problems the Invention is Intended to Solve

In view of the foregoing, an object of the present invention is to provide an exceptionally practical drilling tool and method for manufacturing the same, the drilling tool being configured so that a portion where there is no coating film and the tool base material is exposed is provided to the point of the tool main body and certain ranges at the outer circumferential sides of the cutting edges are covered by the coating film, whereby electroconductivity is ensured between the tool point and the material being drilled, and any decrease in drilling quality can be minimized more so than with a non-coated drill.

### MEANS FOR SOLVING PROBLEMS

The main points of the present invention are described below with reference to the attached drawings.

The present invention relates to a drilling tool in accordance with claim 1 and a method for manufacturing such a drilling tool according to claim 9.

Further aspects of the invention are recited in claims 2 to 10.

### Effect of the Invention

Because it is constructed in the manner described above, the present invention results in an exceptionally practical drilling tool and method for manufacturing the same, in which electroconductivity is ensured between the tool point and the material being drilled, and any decrease in drilling quality can be minimized more so than with a non-coated drill.

### BRIEF DESCRIPTION OF THE DRAWINGS

FIG. 1 includes views of this embodiment from six sides;
FIG. 2 includes enlarged schematic illustrative views of a point of a straight-shaped tool main body ((a) is a left-side view, (b) is a front view, and (c) corresponds to the plan view of FIG. 1; the same applies to FIGS. 3 to 5 and 11 to 16 below);
FIG. 3 includes enlarged schematic illustrative views of a point of an undercut-shaped tool main body;
FIG. 4 includes enlarged schematic illustrative views illustrating a configuration example of an exposed part ((d) is an enlarged schematic illustrative cross-sectional view of a center vicinity within the square frame of (a), and (b) is seen from the same direction);
FIG. 5 includes enlarged schematic illustrative views illustrating the exposed part of this embodiment;
FIG. 6 includes enlarged schematic illustrative views illustrating a configuration example of the exposed part;
FIG. 7 includes enlarged schematic illustrative views illustrating a configuration example of the exposed part;
FIG. 8 includes enlarged schematic illustrative views illustrating a configuration example of the exposed part;
FIG. 9 includes enlarged schematic illustrative views illustrating a configuration example of the exposed part;
FIG. 10 includes enlarged schematic illustrative views illustrating a configuration example of the exposed part;
FIG. 11 includes enlarged schematic illustrative views illustrating a configuration example of the exposed part;
FIG. 12 includes enlarged schematic illustrative views illustrating a configuration example of the exposed part;
FIG. 13 includes enlarged schematic illustrative views illustrating a configuration example of the exposed part;
FIG. 14 includes enlarged schematic illustrative views illustrating a configuration example of the exposed part;
FIG. 15 includes enlarged schematic illustrative views illustrating a configuration example of the exposed part;
FIG. 16 includes enlarged schematic illustrative views illustrating a configuration example of the exposed part;
FIG. 17 is a schematic illustrative view illustrating removal of a coating film with a laser;
FIG. 18 is a schematic illustrative view illustrating removal of a coating film with a grindstone;
FIG. 19 is an exterior photograph of a tool point;
FIG. 20 is an exterior photograph of a tool point;
FIG. 21 is an exterior photograph of a tool point;
FIG. 22 is an exterior photograph of a tool point;
FIG. 23 is a schematic side view as seen from a direction X parallel to a new chisel edge of FIG. 5; and
FIG. 24 is a table showing experiment conditions and experiment results.

### BEST MODE FOR CARRYING OUT THE INVENTION

A preferred embodiment of the present invention is briefly described below with reference to the diagrams.

When a hole is drilled in a PCB or another material being drilled having an electroconductive layer on a surface, an exposed part 6 can be directly brought into contact with the material being drilled when a point of a tool is brought into contact with the surface of the material being drilled. Therefore, even in cases in which a tool base material is covered by a coating film 5 having low electroconductivity, the tool base material and the material being drilled can be satisfactorily electrified, and contact between the to can be electrically sensed (electric conduction of the two can be sensed).

Any decrease in drilled hole quality can be better minimized than with a non-coated drill, because the coating film 5 covers at least a certain range of an outer-circumference-side of a cutting edge 4.

That is, according to the present invention, even if the point of the tool is covered by the coating film 5 having low electroconductivity in order to ensure drilled hole quality, drilling depth can be satisfactorily controlled with a drilling reference position being a position where the point of the tool comes into contact with (the electroconductive layer of) the PCB or other material being drilled. Additionally, erroneous sensing of tool breakage, which occurs due to poor electrification between the tool base material and the material being drilled, can be prevented, and drilling interruptions caused by this erroneous sensing can also be prevented.

### Embodiments

A specific embodiment of the present invention is described below with reference to the drawings.

The embodiment describes a drilling tool in which one or more helical chip-evacuating flutes 2 are provided, from the tool point to the base, in the outer circumference of a tool main body 1 made by covering a tool base material made of a cemented carbide with the coating film 5, and one or more cutting edges 4 are provided in intersecting ridge lines between the helical chip-evacuating flutes 2 and point reliefs 3, wherein the point of the tool main body 1 is provided with an exposed part 6 in which there is no coating film 5 and the tool base material is exposed, certain ranges in the outer-circumference-sides of the cutting edges 4 are covered by the coating film 5, and when the point of the drilling tool is brought into contact with the surface of a material being drilled, the exposed part 6 comes into contact with the material being drilled.

The parts will be described in detail.

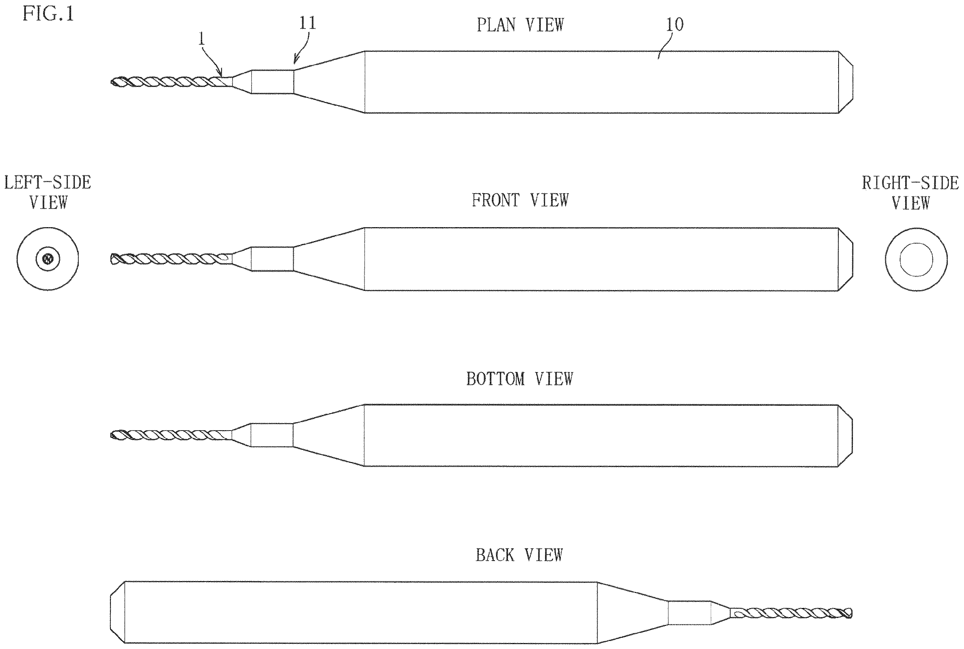

This embodiment is a PCB drill used to drill a hole in a PCB having a copper foil layer (electroconductive layer) in the surface. Specifically, this embodiment is a solid drill having: the tool main body 1 (body part), which has a lip; a shank 10; and a portion 11 where the tool main body 1 and the shank 10 are connected in a row. The tool main body 1 is configured by covering the cemented carbide tool base material with the coating film 5. The shank 10 and the portion 11 in which a row connection is made are made of a cemented carbide (electroconductive material). A diameter of the portion 11 in which a row connection is made is set so as to increase incrementally or continuously toward the base of the tool main body 1. FIG. 1 shows views of this embodiment from six sides. The portion 11 in which a row connection is made is preferably set as appropriate on the basis of a diameter D of the lip of the tool and a diameter of the shank 10, and when, for example, the diameter D of the lip of the tool main body 1 is equal to the diameter of the shank 10 or greater than the diameter of the shank 10, the portion 11 in which a row connection is made need not be provided.

A cemented carbide is not provided by way of limitation for all or part of the shank 10 and the portion 11 in which a row connection is made; these may be formed from stainless steel or another electroconductive material, and may be connected in a row by welding, etc., to the cemented carbide containing the tool main body 1.

The diameter D (maximum diameter) of the lip of the tool main body 1 is set to 0.05 mm or more and 3.175 mm or less, and the diameter of the shank 10 is set to 1.7 mm or more and 3.175 mm or less. This is because when the diameter D of the lip is less than 0.05 mm, there is a risk of breakage in the tool main body 1 due to the effects of cutting resistance during hole drilling and flexure of the tool main body 1. This embodiment employs a drill in which the diameter D of the lip is 0.45 mm and the diameter of the shank 10 is 3.175 mm.

The tool main body 1 may have a "straight" shape in which the diameter remains constant or gradually decreases a slight amount from the point to the base of the tool main body 1, or the tool main body 1 may have an "undercut" shape in which the diameter remains constant or gradually decreases a slight amount from the point to the base of the tool main body 1 and then decreases in one step at the base. With a "back-taper" shape which does not have the previously described portion (undercut portion) that decreases in diameter in one step at the base and in which the diameter of the tool main body 1 gradually decreases a slight amount from the point to the base of the tool main body 1, a contour line at the outer circumference during rotation of the tool main body 1 is a straight line, and a back-taper shape is therefore included in the classification of the straight shape.

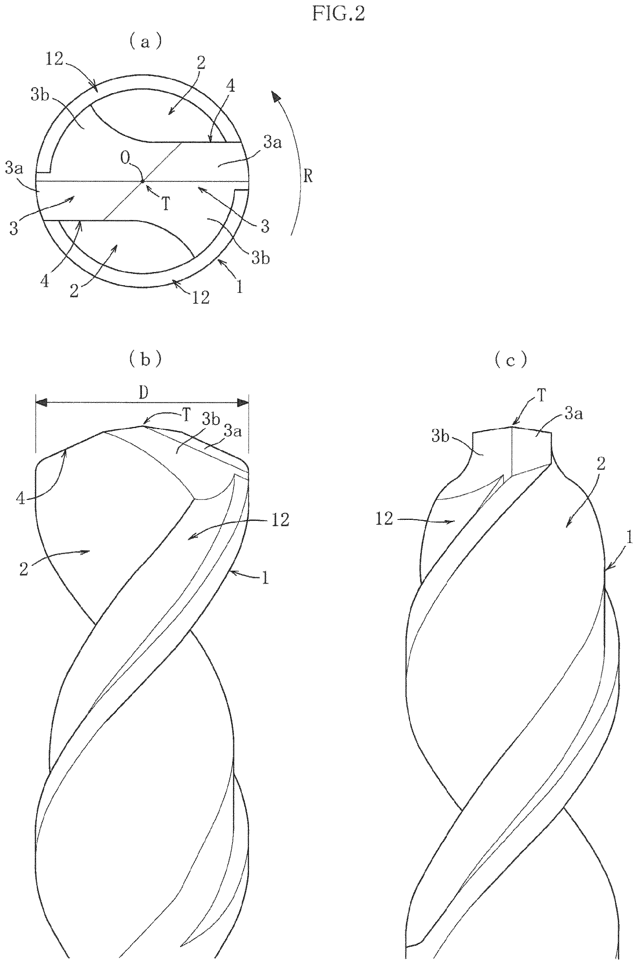

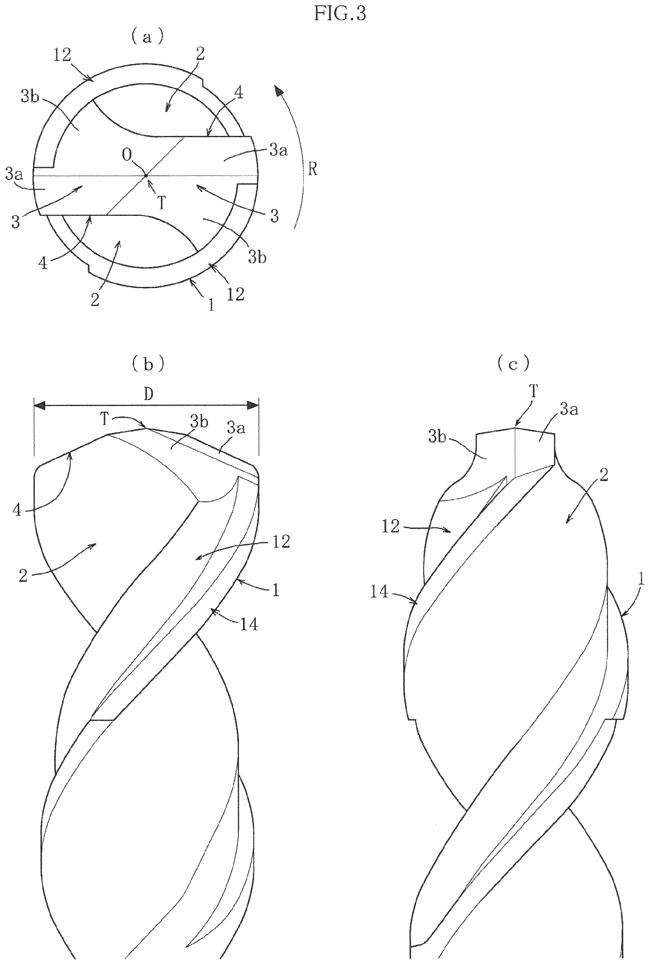

FIG. 2 shows enlarged views of a straight-shaped drilling tool, and FIG. 3 shows enlarged views of the point of the tool main body 1 in an undercut-shaped drilling tool before the exposed part 6 is formed. The symbol 12 in the drawings indicates clearance provided at the outer circumferential surface. It is common for the clearance 12 to be formed only in the points of the chip-evacuating flutes 2 when the tool has an undercut shape, and for the clearance 12 to be formed near to the rear ends of the chip-evacuating flutes 2 when the tool has a straight shape. A configuration in which no clearance is provided may also be used.

This embodiment employs an undercut shape such as that of FIG. 3, and an outer circumferential surface of a large-diameter portion at the point of the lip is set so as to be a margin part 14 that comes into contact with an inner wall of a drilled hole.

Two chip-evacuating flutes 2 are provided in the outer circumference of the lip of the tool main body 1. The intersecting ridge lines between the chip-evacuating flutes 2 and the point reliefs 3 of the tool point (the point of the lip) are each provided with a cutting edge 4 (a total of two). The number of chip-evacuating flutes 2 and cutting edges 4 is not limited to two, and can be set as appropriate. In this embodiment, the point reliefs 3 are formed by providing the coating film 5 to point surfaces inclined at certain angles in the tool base material.

The coating film 5 is provided at least from the point of the tool base material to a rear end of the margin part 14. This embodiment has a configuration in which the coating film 5 covers the entire region from the point of the tool base material to the rear end of the portion 11 in which a row connection is made (except for the exposed part 6). The symbol (5) of the coating film is appointed only to a cross-sectional portion of the coating film at the tool point.

Each one of the point reliefs 3 is composed of a primary relief 3a, which is inclined at a certain angle relative to a rotational axis A of the tool, and a secondary relief 3b, which is provided rearward in the tool rotational direction from the primary relief 3a and which is inclined at a different angle than the primary relief 3a. The cutting edges 4 are provided in intersecting ridge lines between the primary reliefs 3a of the point reliefs 3 and rake surfaces facing forward in the tool rotational direction in the chip-evacuating flutes 2.

The point reliefs 3 (primary reliefs 3a and secondary reliefs 3b) are provided as a pair with a tool rotational center O therebetween, the intersecting ridge lines of this pair of point reliefs 3 (primary reliefs 3a and secondary reliefs 3b) form chisel edges, and a center portion of these chisel edges (portion near the tool rotational center O) is set to be a chisel part T (a portion that protrudes farthest toward the tool point and that is first to come into contact with the material being drilled during drilling).

Specifically, the tool main body 1 of this embodiment has a "four-surface relief" drill shape provided with two point reliefs 3 at the tool point, each relief comprising a primary relief 3a and a secondary relief 3b, for a total of four reliefs, and the point of intersection between the intersecting ridge line (boundary ridge line) of the primary reliefs 3a and the secondary reliefs 3b rearward in the tool rotational direction from the primary reliefs 3a, and the intersecting ridge line (chisel edge) of the primary reliefs 3a and the secondary reliefs 3b forward in the tool rotational direction from the primary reliefs 3a, is set to be the chisel part T (a chisel point).

When the tool does not have the four-surface relief drill shape but instead has a "two-surface relief" drill shape provided with a pair of point reliefs 3 each configured from a single relief, the intersecting ridge line of this pair of point reliefs 3 forms a chisel edge orthogonal to the tool rotational axis A and is set to be the chisel part T.

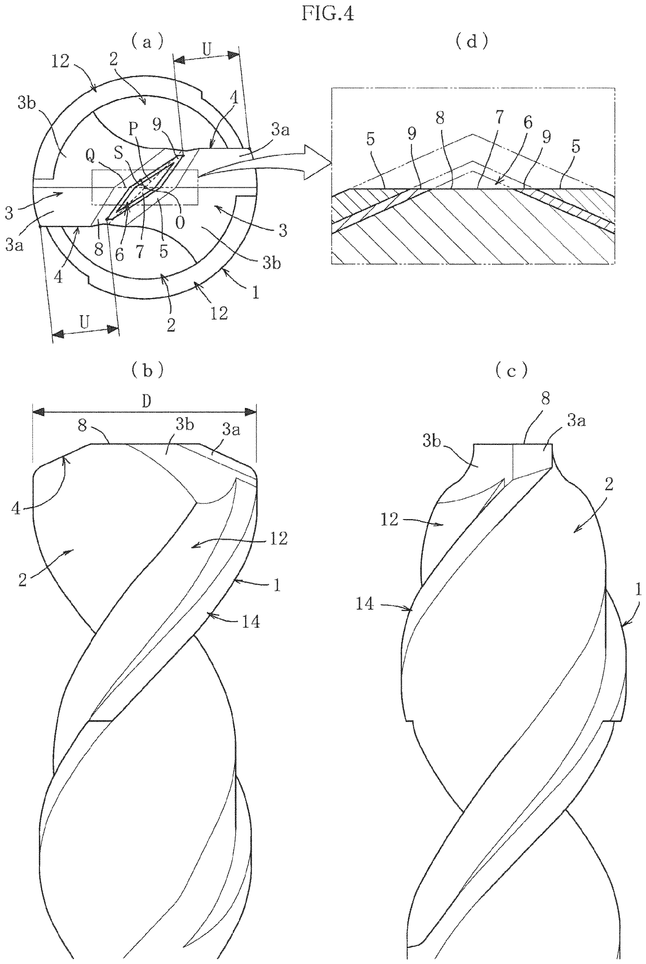

The exposed part 6 is provided at the most distal point of the tool main body 1 (refer to FIGS. 4 to 14; FIGS. 6 to 10 show only (a) the tool point surface (a portion corresponding to the left-side surface view in FIG. 1) of the point of the tool main body 1 and (b) a portion corresponding to the front view in FIG. 1). Specifically, the exposed part 6 is formed by removing the coating film 5 in part of the point reliefs 3 to expose the surface of the tool base material, and is provided adjacent to the point reliefs 3.

In this embodiment, the exposed part 6 is formed by removing at least the coating film 5 of the chisel part T.

Specifically, the exposed part 6 is formed by exposing the vicinity of the chisel part T of the tool main body 1 including the chisel part T, i.e., the surface (point surface) of the tool base material constituting the primary reliefs 3a or the secondary reliefs 3b, or part of the surface of the tool base material constituting the cutting edges 4. Therefore, the exposed part 6 is provided either between the two primary reliefs 3a, between the two secondary reliefs 3b, or between the primary reliefs 3a and a secondary reliefs 3b.

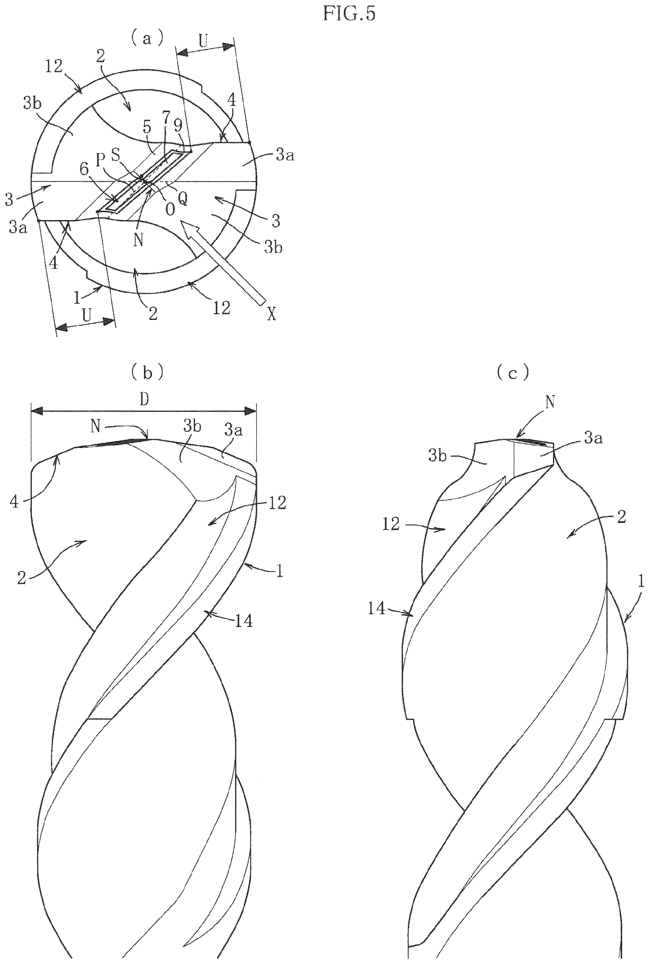

In this case, when the exposed part 6 and the chip-evacuating flutes 2 positioned forward in the tool rotational direction from the cutting edges 4 intersect (when range in which the coating film 5 is removed extends to the cutting edges 4, i.e., when at least the cross-sectional exposed portion of the coating film 5 in the periphery of the exposed part 6, described hereinafter, reaches the cutting edges 4), the range in which the exposed part 6 is provided is set so that the coating film 5 remains in at least a certain range in the tool-outer-circumference sides of the cutting edges 4. Specifically, the coating film 5 may remain even in a slight amount on the tool-outer-circumference sides of the cutting edges 4, but it is preferred that in the exposed part 6 intersecting the chip-evacuating flutes 2 positioned forward in the tool rotational direction from the cutting edges 4 in a tool point view, the exposed part 6 is provided so that the coating film 5 remains in a range such that a shortest distance U between outer edges of the exposed part 6 (i.e., border lines between the exposed part 6 and the coating film 5 (a cross-section of the coating film 5)) and tool-outer-circumferential ends of the cutting edges 4 is 10% or more of the diameter D of the lip (refer to FIGS. 4 and 5). The purpose of this is to maintain the effect by which the presence of the coating film 5 minimizes wear on the tool base material and to maintain cutting performance to minimize any decrease in drilled hole quality in comparison with a non-coated drill while making the exposed part 6 as wide as possible, because contact (electrification) between the exposed part 6 and the material being drilled is more satisfactory with a wider exposed part 6.

Therefore, the coating film 5 is provided to the point of the lip of the tool main body 1, except for the portion where the exposed part 6 is provided.

Specifically, the exposed part 6 of this embodiment is formed by providing the coating film 5 from the point of the tool base material to the rear end of the portion 11 in which a row connection is made as in a common coating drill, and then removing the coating film 5 at part of the point of the tool main body 1 (the detailed formation method is described hereinafter). When the coating film 5 is removed, a cross-section of the coating film 5 is exposed in the periphery of the exposed part 6, as shown in FIG. 4, etc. The symbol 9 in the drawings indicates an electroconductive intermediate layer (adhesive layer) formed when the coating film 5 covers the tool base material surface of the tool main body 1.

In this embodiment, the exposed part 6 is composed of a base material exposed surface 7, which is the surface of the tool base material, and a cross-section of the intermediate layer 9.

Specifically, to increase adhesiveness of the coating film 5 in this embodiment, a modification treatment is performed to provide a modification treatment layer to the tool base material of the tool main body 1, i.e., the surface of the cemented carbide which is an electroconductive material, and this layer is covered by the coating film 5. This modification treatment layer is the intermediate layer 9, and this intermediate layer 9 retains electroconductivity without significantly compromising the electroconductivity of the original cemented carbide (i.e., the intermediate layer 9 is part of the tool base material) . The above configuration is not provided by way of limitation; the tool base material surface of the tool main body 1 may be covered with an electroconductive coating film as the intermediate layer 9, this film having different electroconductivity than the low-electroconductivity coating film 5, and the intermediate layer 9 may be covered by the coating film 5 (in this case as well, the intermediate layer 9 is treated as part of the tool base material in the same manner as in this embodiment).

When the coating film 5 on part of the point of the tool main body 1 is removed, the base material exposed surface 7, which is the surface of the tool base material, need not be provided and the exposed part 6 may be configured with only the intermediate layer 9 exposed.

When there is no problem with the adhesiveness between the tool base material of the tool main body 1 and the coating film 5, it is not absolutely necessary to provide the intermediate layer 9 (in this case, the base material exposed surface 7 becomes the exposed part 6) .

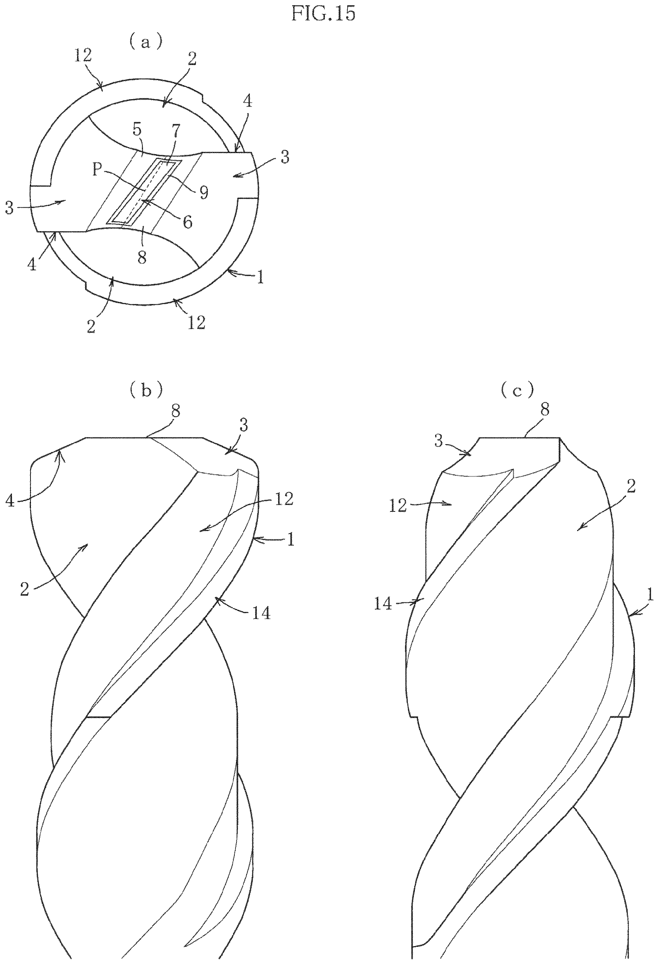

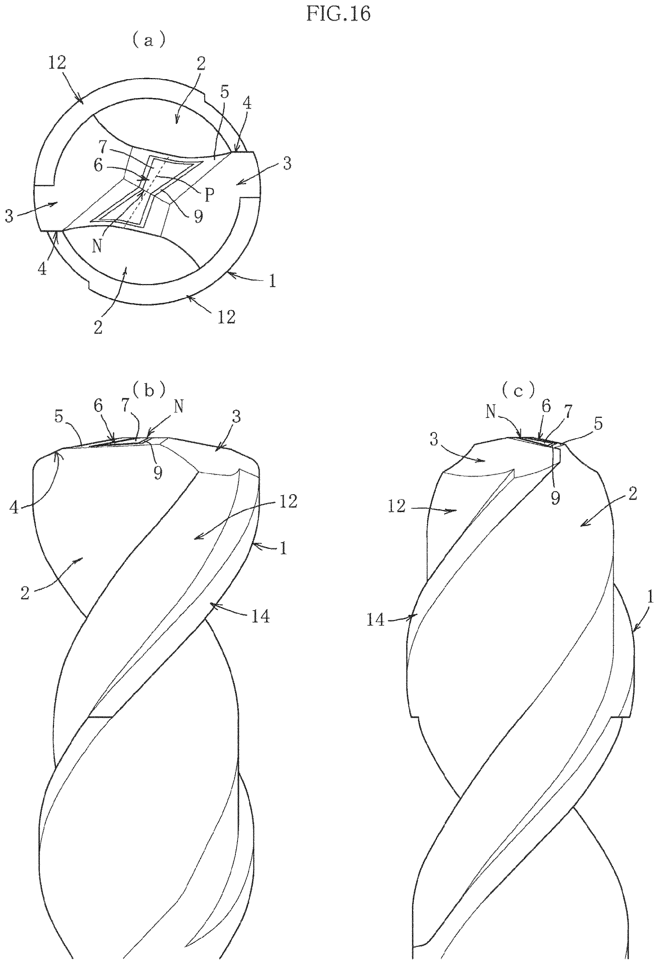

The four-surface relief drill shape is not provided by way of limitation; a "two-surface relief drill" shape may be used in which a pair of point reliefs 3 are provided, each composed of a single relief. In this case as well, the exposed part 6 is provided to the most distal point of the tool main body 1 (refer to FIGS. 15 and 16) .

The coating film 5 of this embodiment is a diamond cover film. Specifically, the coating film 5 is a polycrystalline diamond cover film, and to increase adhesiveness, a "decobaltization" treatment is performed to reduce the amount of cobalt (Co) present on the surface of the tool base material (the surface of the cemented carbide), and the modification treatment layer (the intermediate layer 9) is formed. The film thickness of the coating film 5 is set to 3 *µ*m or more and 20 *µ*m or less. This thickness is preferably 4 *µ*m or more and 14 *µ*m or less. Even when the coating film itself has exceptionally superior wear resistance, in cases such as when the material being drilled has a high degree of hardness, there is a risk that the coating film 5 will wear out prematurely if it is too thin. If the coating film 5 is too thick, peeling will occur due to the effect of internal stress in the coating film 5, or the lip angle will become obtuse and sharpness will decrease due to the presence of the thick film on the cutting edges 4.

The diamond cover film is not provided by way of limitation; another coating film 5 may be employed.

If the shape of the exposed part 6 is such that contact area with the surface of the material being drilled can be ensured, any flat surface or curved surface may be used. The exposed part 6 of this embodiment is a flat surface.

In a view of the tool point in this embodiment, the tool rotational center O lies within the exposed part 6, and a shortest distance S between the tool rotational center O and the outer edges of the exposed part 6, i.e., the border lines of the exposed part 6 and the coating film 5 is 1.5 *µ*m or more (refer to FIGS. 4 and 5). This is because if the shortest distance S is less than 1.5 pm, the electroconductive region exposed in the tool point will be too small, and there will be a possibility that proper electric conduction with the material being drilled will be inhibited by, *inter alia,* adhesion during drilling.

The border lines of the exposed part 6 and the coating film 5 are "border lines of the intermediate layer 9 and the coating film 5 in a view of the tool point" when the intermediate layer 9 is present, and are "border lines of the tool base material of the tool main body 1 and the coating film 5" when the intermediate layer 9 is not present.

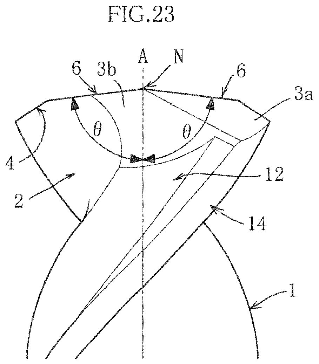

Exposed parts 6 are provided so as to protrude (at an upward incline) at the tool point from the tool outer circumference toward the tool rotational center in a side view of the tool, as shown in FIG. 23. Specifically, inclination angles *θ* formed by the exposed parts 6 (the base material exposed surface 7) and the tool rotational axis A are each set so as to be 87.5° or less. When the exposed part 6 is a curved surface, the inclination angle *θ* of a ridge line of the curved surface (e.g., a portion equivalent to a generating line of a cone surface) in a tool side view is 87.5° or less.

The method of forming the exposed part 6 shall be described in detail.

The exposed part 6 can be formed by removing part of the coating film 5 of the tool main body 1. The coating film 5 in any location can be removed by, for example, grinding with a grindstone or another mechanical method, or removal machining with high-energy light irradiation such as a laser, or another optical method.

In this embodiment, the surface of the tool base material constituting a part or all of the point reliefs or a part of each of the cutting edges, this surface including the intersecting ridge lines or the chisel edges of the tool main body 1, is removed along with the coating film 5. The inclination angle *θ* of the exposed part 6 formed by this removal can be an angle (90°) orthogonal to the tool rotational axis A, and can also be appropriately set within the angular range described above. Biting performance, etc., can be improved by appropriately setting the inclination angle *θ* of the exposed part 6. The intersecting ridge line or intersection point between the exposed part 6 can also be, instead of the chisel part T formed in the tool main body 1 before the removal machining, a new chisel part N where the coating film 5 is not provided (a new chisel edge or a new chisel point).

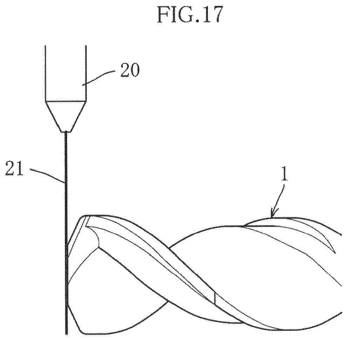

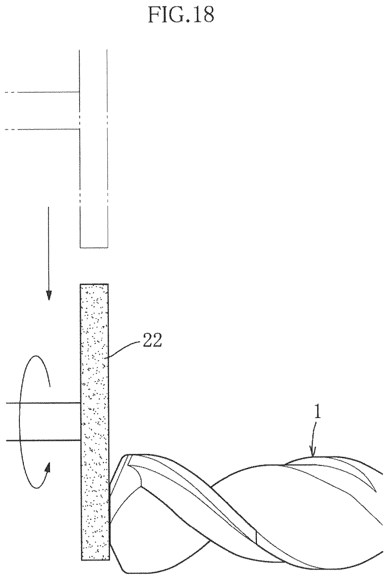

An example of the simplest method when removing the coating film 5 is to remove the coating film 5 and the surface of the tool base material by irradiating the tool point with a laser 21 from a laser-radiating device 20 (FIG. 17), or by bringing a grindstone 22 into contact with the tool point (FIG. 18), from a direction orthogonal to the tool rotational axis A so that the exposed part 6 will constitute a flat surface orthogonal to the tool rotational axis A of the tool main body 1 (so that the removal surface will be a flat surface) .

In this case, the exposed part 6 is provided to a point flat surface 8 positioned at the most distal point of the tool (a flat surface that comes into contact with the material being drilled during drilling), such as is shown in FIG. 4. That is, one point flat surface 8 is formed in which the exposed part 6 (the cross-section of the base material exposed surface 7 and the intermediate layer 9) and the cross-section of the coating film 5 are one substantially planar flat surface, and the cross-section of the base material exposed surface 7 and intermediate layer 9 and the cross-section of the coating film 5 are arranged in parallel with no level differences.

Specifically, FIG. 4 is an example (a flat type) in which part of the coating film 5 and the tool base material is removed so that the above-described exposed part 6 is included in the point flat surface 8 orthogonal to the tool rotational axis A of the tool main body 1. In this case, machining is easy, but on the other hand, a surface corresponding to the film thickness of the coating film 5 (a cross-section of the coating film 5) is formed in order to expose the tool base material of the tool main body 1 or the intermediate layer 9; therefore, the total area of the flat surface formed at the tool point increases, and there are cases in which biting performance of the tool is compromised or thrust resistance increases and tool performance is compromised.

In view of this, in this embodiment, the inclination angles *θ* are set so that the exposed part 6 is not one surface orthogonal to the tool rotational axis A, but is composed of surfaces formed substantially parallel to the chisel edges of the tool main body 1, and both chisel edges (and vicinities thereof) are formed by removing the tool point so that the exposed parts 6 and the cross-section of the coating film 5 manifest as one substantially planar flat surface (one flat inclined surface in which the base material exposed surface 7, the cross-section of the intermediate layer 9, and the cross-section of the coating film 5 are arranged in parallel with no level differences).

Specifically, as shown in FIG. 5, the inclination angles *θ* formed by the exposed parts 6 and the tool rotational axis A are set so that the exposed parts 6 are substantially parallel to the chisel edges of the tool main body 1, the chisel edges (the coating film 5 and the surface of the tool base material) are removed, and the intersecting ridge line between the flat inclined surfaces, which include the exposed parts 6 formed between the primary reliefs 3a and the secondary reliefs 3b (the exposed parts 6 provided adjacent to the primary reliefs 3a and the secondary reliefs 3b forward in the tool rotational direction), is made to be a new chisel edge (a new chisel part N). In this case, the angle formed between the exposed parts 6 is more obtuse than the point angle of the tool main body 1 before machining. In FIG. 5(a), the chisel edge before the removal machining is shown by a dashed line P. The same applies to FIGS. 4(a), 6(a), 7(a), and 11(a) to 14(a).

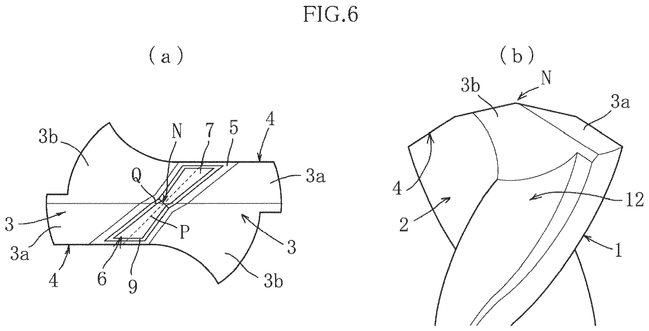

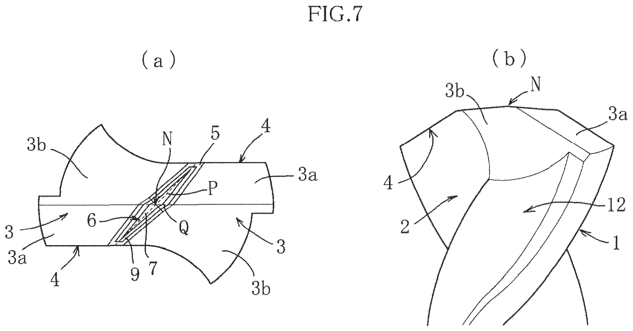

FIG. 6 is an example in which the flat inclined surfaces are not substantially parallel to the chisel edges, but are provided at inclination angles *θ* smaller than the angles formed by the chisel edges and the tool rotational axis A (the flat inclined surfaces are provided at acute angles), and FIG. 7 is an example in which the flat inclined surfaces are provided at inclination angles *θ* greater than the angles formed by the chisel edges and the tool rotational axis A (the flat inclined surfaces are provided at obtuse angles). Both are examples in which new chisel edges (a new chisel part N) are formed, as with the example in FIG. 5.

The flat inclined surfaces including the exposed parts 6 may be formed by removing a border ridge line (and a vicinity thereof) so that the flat inclined surfaces are formed substantially parallel to the border ridge line of the tool main body 1.

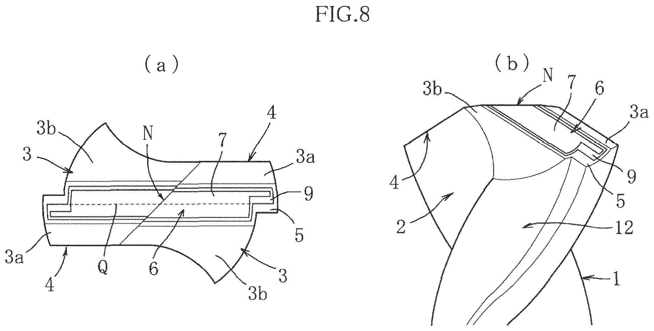

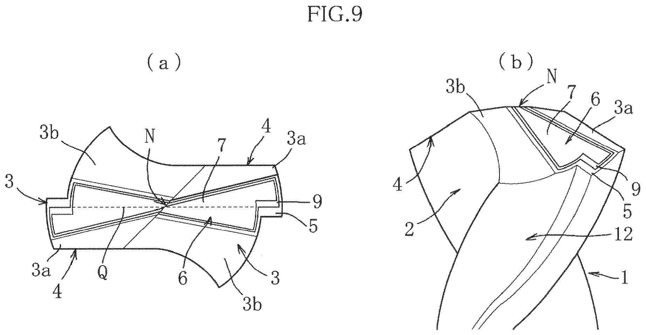

FIG. 8 is an example in which the above-described border ridge line is removed so that the flat inclined surfaces are substantially parallel to the border ridge line, and the intersecting ridge line between the flat inclined surfaces, which include the exposed parts 6 formed between the primary reliefs 3a and the secondary reliefs 3b (exposed parts 6 provided adjacent to the primary reliefs 3a and the secondary reliefs 3b rearward in the tool rotational direction), is a new chisel edge (a new chisel part N). In this case, the angle formed between the exposed parts 6 is more acute than the angle at the point of the tool main body 1 before machining. In FIG. 8(a), the border ridge line before the removal machining is shown by the dashed line Q. The same applies to FIGS. 9(a) to 13(a).

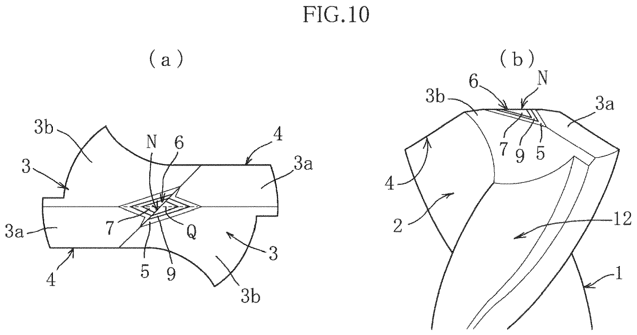

FIG. 9 is an example in which the flat inclined surfaces are not parallel to the border ridge line, but are provided at inclination angles *θ* smaller than the angle formed by the border ridge line and the tool rotational axis A (the flat inclined surfaces are provided at acute angles), and FIG. 10 is an example in which the flat inclined surfaces are provided at inclination angles *θ* greater than the angle formed by the border ridge line and the tool rotational axis A (the flat inclined surfaces are provided at obtuse angles). Both are examples in which a new chisel edge (a new chisel part N) is formed, as with the example of FIG. 8.

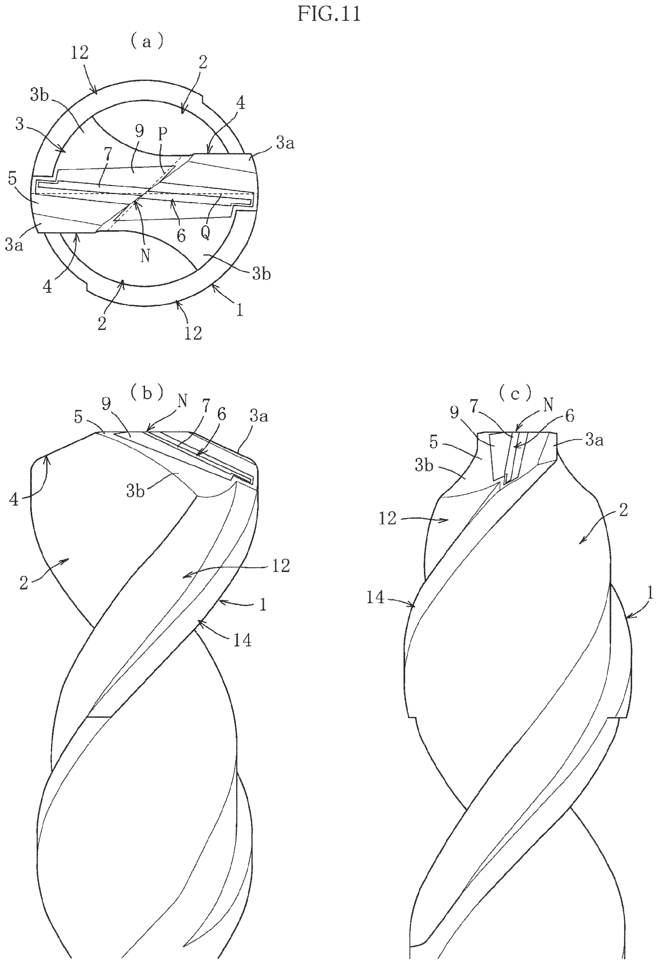

FIG. 11 is an example in which flat inclined surfaces substantially parallel to the border ridge line are formed, as with the example of FIG. 8, but in this example, the coating film 5 and the surface of the tool base material are removed from most of the primary reliefs 3a and the secondary reliefs 3b, except for the vicinities of the cutting edges 4.

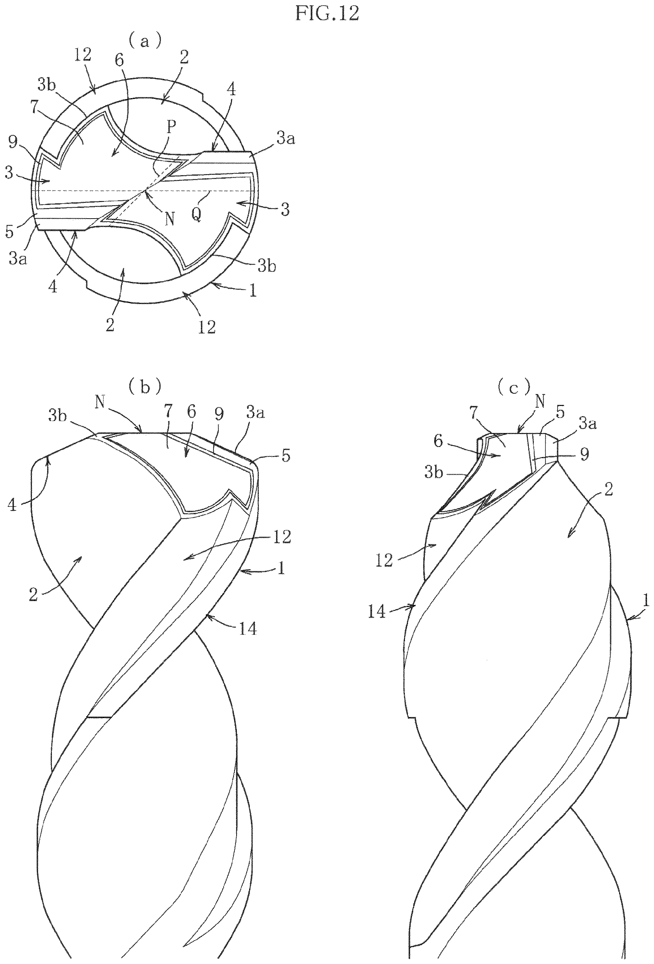

The flat inclined surfaces including the exposed parts 6 may be expanded to the primary reliefs 3a at angles along the secondary reliefs 3b by removing the coating film 5 and the surface of the tool base material from substantially all of the secondary reliefs 3b and removing the coating film 5 and the surface of the tool base material from a part of each of the primary reliefs 3a, at angles along the secondary reliefs 3b, as shown in FIG. 12. In this case, much of the coating film 5 can be left on the primary reliefs 3a (the cutting edges 4) by providing the exposed part 6 mainly to the secondary reliefs 3b which do not directly contribute to cutting, and the wear resistance of the entire cutting edges 4 can therefore be maintained.

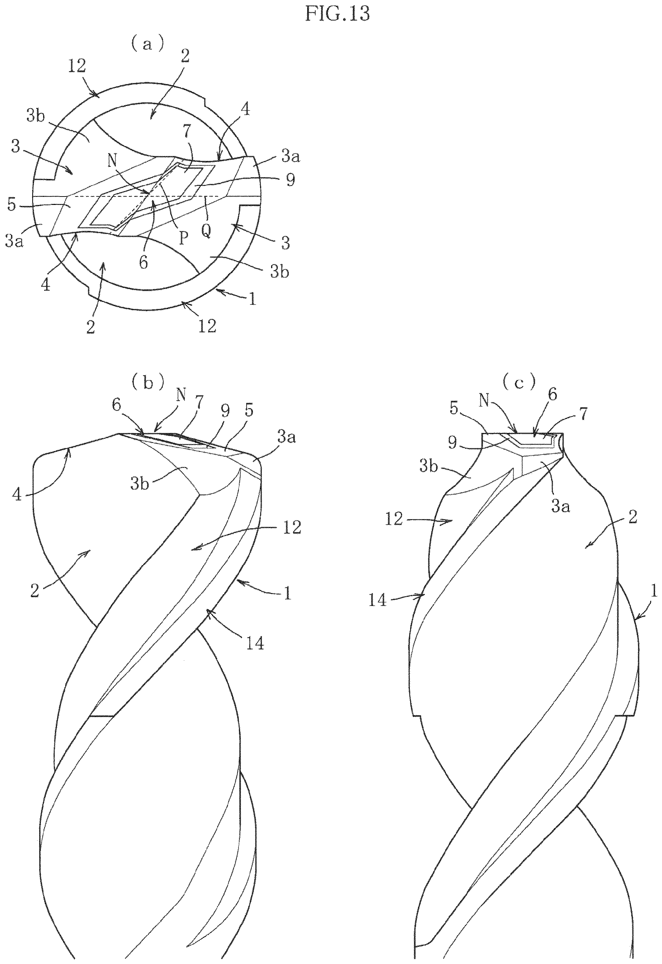

Also, as shown in the FIG.13, the flat inclined surfaces may also be provided by removing the coating film 5 and the surface of the tool base material from most of the primary reliefs 3a except for the vicinities of the outer circumferential sides (corner parts) of the cutting edges 4, and removing the coating film 5 and the surface of the tool base material from a part of each of the secondary reliefs 3b, both at neutral angles such that neither are parallel to the primary reliefs 3a or the secondary reliefs 3b. In this case, the cutting edges 4 are sharp due to the coating film 5 being partially removed from most of the cutting edges 4, i.e., due to most of the cutting edges 4 being intersecting ridge lines between the cross-section of the coating film 5 and the rake surfaces, and there is a possibility of sharpness improving.

In each of the examples of FIGS. 11 to 13, a new chisel edge (a new chisel part N) is formed.

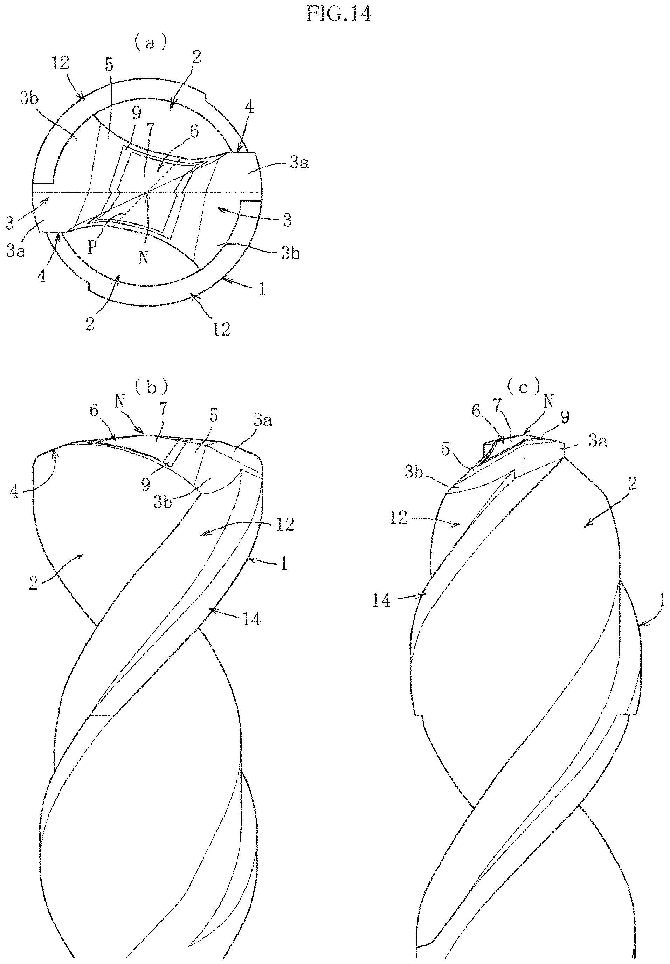

The tool may also have a configuration in which four of the flat inclined surfaces are provided to positions surrounding the tool rotational center O at different angles from the point reliefs 3 (the primary reliefs 3a and the secondary reliefs 3b) before removal machining so that the center forms a new chisel point (a new chisel part N), as shown in FIG. 14.

In the method described above, the exposed parts 6 can be provided by removing the coating film 5, etc., from the chisel part T at the most distal point of the tool, from a part of each of the primary reliefs 3a, and from a part of each or all of the secondary reliefs 3b.

Rather than removing the coating film 5 that had been provided to the tool base material as described above, when the coating treatment is performed on the tool base material, the portions where the exposed parts 6 are to be provided may be masked, and the coating film 5 need not be formed on these portions, whereby the exposed parts 6 are provided. In this case, the exposed parts 6 can be provided in the same manner as in the above-described case of removing the coating film 5, except that a new chisel part N cannot be formed.

In the case of a two-surface relief drill shape, the chisel edge of the tool main body 1 and the tool rotational axis A are orthogonal; therefore, as shown in FIG. 15, some of the coating film 5 and tool base material may be removed so that the exposed part 6 is included in the point flat surface 8 which is orthogonal to the tool rotational axis A of the tool main body 1 (so that the exposed part 6 is substantially parallel to the chisel edge), or, as shown in FIG. 16, rather than having the exposed part 6 be substantially parallel to the chisel edge, the inclination angles *θ* formed by the exposed parts 6 and the tool rotational axis A may be set smaller than the angle formed by the chisel edge and the tool rotational axis A, the chisel edge (and the vicinity thereof) may be removed, and the intersecting ridge line between the exposed parts 6 (the inclined flat surfaces) provided between the point reliefs 3 may be a new chisel edge (a new chisel part N). In the case of FIG. 15, machining is easy, but on the other hand, a surface corresponding to the film thickness of the coating film 5 (a cross-section of the coating film 5) is formed in order to expose the tool base material of the tool main body 1 or the intermediate layer 9; therefore, the total area of the flat surface formed at the tool point increases, and there are cases in which biting performance of the tool is compromised or thrust resistance increases and tool performance is compromised. In the case of FIG. 16, the chisel edge can be shorter than with the original two-surface shape, and biting performance can be improved.

In FIGS. 15(a) and 16(a), the chisel edge before removal machining is shown by a dashed line P.

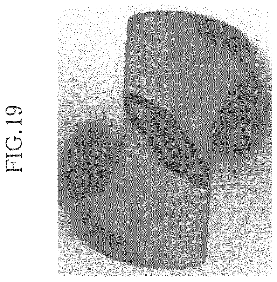

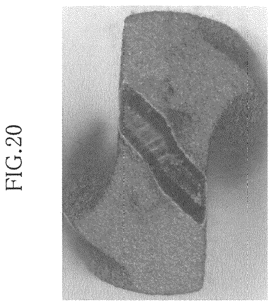

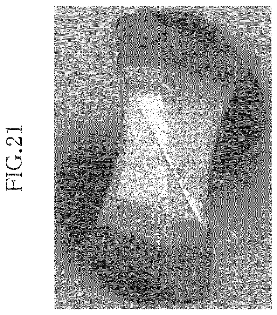

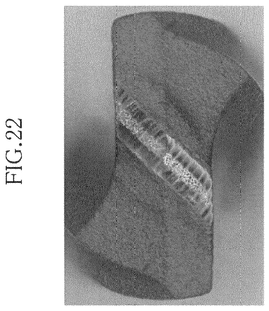

In a tool provided with the exposed part 6, the point has a unique outward appearance not seen in other drills: the base material exposed surface 7 of the tool base material, the cross-section of the electroconductive intermediate layer 9 of the tool base material, and the cross-section of the coating film 5 appear in the stated order. FIGS. 19, 20, and 21 are exterior photographs of the point when the coating film 5 (and the surface of the tool base material) has been removed by a grindstone in the configurations of FIGS. 4, 5, and 14, respectively. FIG. 22 is an exterior photograph of the point when the coating film 5 (and the surface of the tool base material) has been removed by a laser in the configuration of FIG. 5.

Because this embodiment is configured as described above, when the point of the tool is brought into contact with the surface of the material being drilled during drilling in the material being drilled, in which an electroconductive layer is included on the surface of a PCB, etc., the exposed part 6 can be directly brought into contact with the material being drilled. Therefore, even when the tool base material is covered by the coating film 5 which has low electroconductivity, the tool base material and the material being drilled can be satisfactorily electrified, and contact between the two can be electrically sensed (electric conduction of the two can be sensed).

Any decrease in drilling quality can be minimized more so than with a non-coated drill, because at least certain ranges in the outer circumferential sides of the cutting edges 4 are covered by the coating film 5.

That is, according to this embodiment, even if the coating film 5 of low electroconductivity covers the point of the tool in order to ensure drilling quality, drilling depth can be satisfactorily controlled with the drilling reference position being the position where the point of the tool comes into contact with (the electroconductive layer of) the PCB or other material being drilled. Additionally, erroneous sensing of tool breakage, which occurs due to poor electrification between the tool base material and the material being drilled, can be prevented, and drilling interruptions caused by this erroneous sensing can also be prevented.

Consequently, this embodiment is exceptionally practical in that electroconductivity is ensured between the tool point and the material being drilled, and any decrease in drilling quality can be minimized more so than with a non-coated drill.

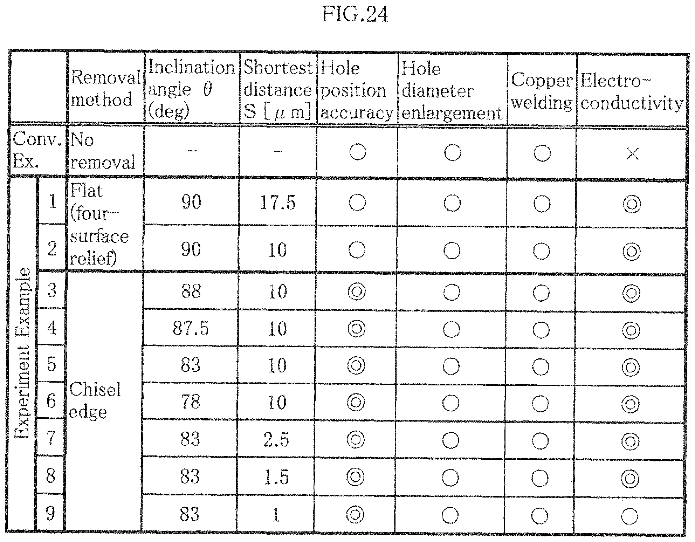

An experiment example supporting the effects of this embodiment is described with reference to FIG. 24.

### [Machining conditions]

- On a drill having an undercut with two edges (four-surface relief), a lip diameter of 0.45 mm, and a flute length of 5.5 mm, a crystalline diamond cover film treatment was carried out so that the film thickness was 10 *µ*m.
- Four PCBs to be machined were superposed, each having a thickness of 1.0 mm (six-layer board), and a copper foil layer thickness of 18 *µ*m in the outer layer and 35 *µ*m in the inner layer.
- The cover plate was a baking plate (a non-electroconductive material) having a thickness of 0.4 mm (used to minimize burrs in the surface of the highest of the four superposed substrates).
- The sacrificial plate was a baking plate, and the amount of incision into the sacrificial plate was 0.4 mm.
- The number of hits was 3000.
- A conventional example has a configuration in which the coating film 5 is not removed and an exposed part 6 is not provided. Experiment examples 1 and 2 have configurations (flat type) in which the coating film 5 is removed so that the exposed part 6 is included in the point flat surface 8 orthogonal to the tool rotational axis A as shown in FIG. 4, and the size of the exposed part 6 in the tool point (the shortest distance S between the coating film 5 and the tool rotational center O) is different in each example. Experiment examples 3 to 9 have configurations in which the coating film 5 is removed along the chisel edge as shown in FIG. 5, and either the inclination angle *θ* of the base material exposed surface 7 relative to the tool rotational axis A or the size of the exposed part 6 in the tool point (the shortest distance S between the outer edges of the exposed part 6 and the tool rotational center O) is different in each example.

Machining was performed with the conditions described above, and the following points were measured and evaluated.
- Hole position accuracy: amount by which the position of the hole actually machined had shifted from the target position in a program (evaluated at the reverse side of the lowest of the four superposed substrates)
- Hole diameter enlargement: amount of hole diameter enlargement caused by the advance of the drill in the cover plate or the substrate surface (evaluated in the surface of the highest of the four superposed substrates)
- Copper welding: amount of overall length variation caused by welding machined copper foil to the tool point
- Electroconductivity: whether or not there was conduction / a circuit was formed due to the tool point penetrating through the cover plate (non-electroconductive baking plate) and coming into contact with the PCB (the surface of the highest of the four superposed substrates)

The evaluation was performed with the following standards.
- Hole position accuracy (n = 10; mean of 3000 hits + 3σ)
   ⊚: no more than 20 pm, ○: greater than 20 um and no more than 35 *µ*m, △: greater than 35 *µ*m and no more than 50 pm, ×: greater than 50 um
- Hole diameter enlargement (n = 10; mean of 3000 hits)
   ○: no more than diameter (D) of lip + 10 pm, △: greater than D + 10 um and no more than D + 25 pm, ×: greater than D + 25 *µ*m
- Copper welding (n = 10)
   For variation in overall length due to copper welding before and after drilling, ○: no more than 1 *µ*m, Δ: greater than 1 *µ*m and no more than 5 *µ*m, ×: greater than 5 *µ*m
- Electroconductivity (n = 100)
   For rate of current sensing in drilling machine during contact between tool point and surface of highest substrate in 1001 hits, ⊚: 100%, ○: 98% or more and less than 100%, △: 95% or more and less than 98%, ×: less than 95%

According to FIG. 24, the tool base material (the cemented carbide portion) of the tool point was not exposed in the conventional example; therefore, there were many cases in which there was no conduction and contact with the surface of the material being drilled (the electroconductive layer) by the drilling machine could not be sensed, whereas in the experiment examples, due to the cemented carbide portion of the tool point being exposed, it was confirmed that contact with the surface of the material being drilled (the electroconductive layer) could be satisfactorily sensed and any decrease in drilling quality could be minimized.

## Claims

1. A drilling tool in which one or more helical chip-evacuating flutes (2) are provided, from a tool point to a base, in an outer circumference of a tool main body (1) having a coating film (5) covering a tool base material made of a cemented carbide, and one or more cutting edges (4) are provided at intersecting ridge lines of the chip-evacuating flutes (2) and a point relief (3),
wherein a most distal point of the tool main body (1) is provided with an exposed part (6) in which there is no coating film (5) and the tool base material is exposed, in a tool point view, in a portion near a tool rotational center (O) and including the tool rotational center (O), and in a tool side view, the exposed part (6) is provided so as to be inclined upward from a tool outer circumference toward the tool rotational center (0),
**characterized in that** certain ranges at the tool-outer-circumference sides of the one or more cutting edges (4) and the point relief (3) connected with the respective cutting edge (4) are covered by the coating film (5).

2. A drilling tool according to claim 1, **characterized in that** the exposed part (6) is provided adjacent to the point relief (3) .

3. A drilling tool according to either claim 1 or 2, **characterized in that** a plurality of the point reliefs (3) are provided, and the exposed part (6) is provided between the plurality of point reliefs (3).

4. A drilling tool according to either claim 1 or 2, **characterized in that** a plurality of the point reliefs (3) are provided, the point reliefs (3) each include a primary relief (3a) and a secondary relief (3b) provided rearward in a tool rotational direction from the primary relief (3a), the primary reliefs (3a) and the secondary reliefs (3b) are provided in pairs with the tool rotational center (O) therebetween, and the exposed part (6) is provided between the primary reliefs (3a), between the secondary reliefs (3b), or between the primary reliefs (3a) and the secondary reliefs (3b).

5. A drilling tool according to any one of claims 1 to 4, **characterized in that** the coating film (5) is a diamond cover film.

6. A drilling tool according to any one of claims 1 to 5, **characterized in that** in a tool point view, the tool rotational center (O) is located in the exposed part (6), and a shortest distance between an outer edge of the exposed part (6) and the tool rotational center (O) is 1.5 *µ*m or more.

7. A drilling tool according to any one of claims 1 to 6, **characterized in that** an angle (inclination angle Θ) formed by the exposed part (6) and a tool rotational axis (A) is 87.5° or less.

8. A drilling tool according to any one of claims 1 to 7, **characterized in that** a diameter (D) of a lip to which the chip-evacuating flutes (2) and the cutting edges (4) are provided is 0.05 mm or more and 3.175 mm or less.

9. A method for manufacturing a drilling tool according to any one of claims 1 to 8, **characterized in that** after the tool base material has been covered by the coating film (5), the exposed part (6) is formed by removing the coating film (5) from a part of each of the point reliefs (3).

10. A method for manufacturing a drilling tool according to claim 9, **characterized in that** when the coating film (5) from a part of each the point reliefs (3) is removed, a part of the tool base material is removed along with the coating film (5).

## Patentansprüche

1. Bohrwerkzeug, bei dem ein oder mehrere spiralförmige Spanabfuhrnuten (2) von einer Werkzeugspitze zu einer Basis in einem Außenumfang eines Werkzeughauptkörpers (1) mit einem Beschichtungsfilm (5), der ein Werkzeugbasismaterial, das aus einem Sinterhartmetall hergestellt ist, bedeckt, vorgesehen sind und ein oder mehrere Schneidkanten (4) bei Schnittgratlinien der Spanabfuhrnuten (2) und einer Spitzenfreifläche (3) vorgesehen sind,
bei dem eine äußerste distale Spitze des Werkzeughauptkörpers (1) von der Werkzeugspitze aus betrachtet in einem Abschnitt in der Nähe eines Werkzeugrotationszentrums (O), der das Werkzeugrotationszentrum (O) aufweist, mit einem freigelegten Teil (6), in dem kein Beschichtungsfilm (5) vorhanden ist und das Werkzeugbasismaterial freigelegt ist, versehen ist und der freigelegte Teil (6) in einer Werkzeugseitenansicht so vorgesehen ist, dass er von einem Werkzeugaußenumfang in Richtung des Werkzeugrotationszentrums (O) nach oben geneigt ist, **dadurch gekennzeichnet, dass** bestimmte Bereiche bei den Werkzeugaußenumfangsseiten der ein oder mehreren Schneidkanten (4) und der Spitzenfreifläche (3), die mit der jeweiligen Schneidkante (4) verbunden ist, durch den Beschichtungsfilm (5) bedeckt sind.

2. Bohrwerkzeug nach Anspruch 1, **dadurch gekennzeichnet, dass** der freigelegte Teil (6) benachbart zu der Spitzenfreifläche (3) vorgesehen ist.

3. Bohrwerkzeug nach Anspruch 1 oder 2, **dadurch gekennzeichnet, dass** mehrere der Spitzenfreiflächen (3) vorgesehen sind und der freigelegte Teil (6) zwischen den mehreren Spitzenfreiflächen (3) vorgesehen ist.

4. Bohrwerkzeug nach Anspruch 1 oder 2, **dadurch gekennzeichnet, dass** mehrere der Spitzenfreiflächen (3) vorgesehen sind, wobei die Spitzenfreiflächen (3) jeweils eine Hauptfreifläche (3a) und eine Sekundärfreifläche (3b), die in einer Werkzeugrotationsrichtung hinter der Hauptfreifläche (3a) vorgesehen ist, aufweisen, wobei die Hauptfreiflächen (3a) und die Sekundärfreiflächen (3b) paarweise mit dem Werkzeugrotationszentrum (O) zwischen diesen vorgesehen sind und der freigelegte Teil (6) zwischen den Hauptfreiflächen (3a), zwischen den Sekundärfreiflächen (3b) oder zwischen den Hauptfreiflächen (3a) und den Sekundärfreiflächen (3b) vorgesehen ist.

5. Bohrwerkzeug nach einem der Ansprüche 1 bis 4, **dadurch gekennzeichnet, dass** der Beschichtungsfilm (5) ein Diamantbeschichtungsfilm ist.

6. Bohrwerkzeug nach einem der Ansprüche 1 bis 5, **dadurch gekennzeichnet, dass** von der Werkzeugspitze aus betrachtet das Werkzeugrotationszentrum (O) in dem freigelegten Teil (6) angeordnet ist und eine kürzeste Entfernung zwischen einem äußeren Rand des freigelegten Teils (6) und dem Werkzeugrotationszentrum (O) 1,5 µm oder mehr beträgt.

7. Bohrwerkzeug nach einem der Ansprüche 1 bis 6, **dadurch gekennzeichnet, dass** ein Winkel (Neigungswinkel θ), der durch den freigelegten Teil (6) und eine Werkzeugrotationsachse (A) ausgebildet wird, 87,5° oder weniger beträgt.

8. Bohrwerkzeug nach einem der Ansprüche 1 bis 7, **dadurch gekennzeichnet, dass** ein Durchmesser (D) einer Lippe, an der die Spanabfuhrnuten (2) und die Schneidkanten (4) vorgesehen sind, 0,05 mm oder mehr und 3,175 mm oder weniger beträgt.

9. Verfahren zum Herstellen eines Bohrwerkzeugs nach einem der Ansprüche 1 bis 8, **dadurch gekennzeichnet, dass** nach einer Bedeckung des Werkzeugbasismaterials durch den Beschichtungsfilm (5) der freigelegte Teil (6) durch Entfernen des Beschichtungsfilms (5) von einem Teil jeder der Spitzenfreiflächen (3) ausgebildet wird.

10. Verfahren zum Herstellen eines Bohrwerkzeugs nach Anspruch 9, **dadurch gekennzeichnet, dass**, wenn der Beschichtungsfilm (5) von einem Teil jeder der Spitzenfreiflächen (3) entfernt wird, ein Teil des Werkzeugbasismaterials gemeinsam mit dem Beschichtungsfilm (5) entfernt wird.

## Revendications

1. Outil de forage dans lequel une ou plusieurs goujures d'évacuation de copeaux hélicoïdales (2) sont pourvues, d'une pointe d'outil à une base, dans une circonférence extérieure d'un corps principal d'outil (1) ayant un film de revêtement (5) recouvrant un matériau de base d'outil en carbure cémenté, et une ou plusieurs arêtes de coupe (4) sont pourvues à l'intersection des lignes de crête des goujures d'évacuation de copeaux (2) et d'un relief de pointe (3),
dans lequel un point le plus distal du corps principal d'outil (1) est pourvu d'une partie exposée (6) dans laquelle il n'y a pas de film de revêtement (5) et le matériau de base d'outil est exposé, dans une vue de pointe d'outil, dans une portion proche d'un centre de rotation d'outil (0) et incluant le centre de rotation d'outil (0), et dans une vue latérale d'outil, la partie exposée (6) est prévue pour être inclinée vers le haut à partir d'une circonférence extérieure d'outil vers le centre de rotation d'outil (0), **caractérisé en ce que** certaines plages sur les côtés de la circonférence extérieure d'outil de ladite ou desdites arêtes de coupe (4) et le relief de pointe (3) relié à l'arête de coupe respective (4) sont couvertes par le film de revêtement (5).

2. Outil de forage selon la revendication 1, **caractérisé en ce que** la partie exposée (6) est adjacente au relief de pointe (3).

3. Outil de forage selon la revendication 1 ou 2, **caractérisé en ce qu'**une pluralité de reliefs de pointe (3) sont prévus et que la partie exposée (6) est prévue entre les reliefs de pointe (3).

4. Outil de forage selon la revendication 1 ou 2, **caractérisé en ce qu'**une pluralité de reliefs de pointe (3) sont prévus, les reliefs de pointe (3) comprennent chacun un relief primaire (3a) et un relief secondaire (3b) situés à l'arrière du relief primaire (3a) dans une direction de rotation d'outil, les reliefs primaires (3a) et les reliefs secondaires (3b) sont disposés par paires avec le centre de rotation (0) de l'outil entre eux, et la partie exposée (6) est disposée entre les reliefs primaires (3a), entre les reliefs secondaires (3b), ou entre les reliefs primaires (3a) et les reliefs secondaires (3b).

5. Outil de forage selon l'une quelconque des revendications 1 à 4, **caractérisé en ce que** le film de revêtement (5) est un film de couverture diamanté.

6. Outil de forage selon l'une quelconque des revendications 1 à 5, **caractérisé en ce que** dans une vue de pointe d'outil, le centre de rotation d'outil (0) est situé dans la partie exposée (6), et que la distance la plus courte entre un bord extérieur de la partie exposée (6) et le centre de rotation d'outil (0) est de 1,5 *µ*m ou plus.

7. Outil de forage selon l'une quelconque des revendications 1 à 6, **caractérisé en ce qu'**un angle (angle d'inclinaison *θ*) formé par la partie exposée (6) et un axe de rotation d'outil (A) est inférieur ou égal à 87,5°.

8. Outil de forage selon l'une quelconque des revendications 1 à 7, **caractérisé en ce que** le diamètre (D) d'une lèvre sur laquelle les goujures d'évacuation de copeaux (2) et les arêtes de coupe (4) sont disposées est supérieur ou égal à 0,05 mm et inférieur ou égal à 3,175 mm.

9. Procédé de fabrication d'un outil de forage selon l'une quelconque des revendications 1 à 8, **caractérisé en ce que** le matériau de base d'outil a été recouvert par le film de revêtement (5), la partie exposée (6) est formée en retirant le film de revêtement (5) d'une partie de chacun des reliefs de pointe (3).

10. Procédé de fabrication d'un outil de forage selon la revendication 9, **caractérisé en ce que** lorsque le film de revêtement (5) d'une partie de chacun des reliefs de pointe (3) est enlevé, une partie du matériau de base d'outil est enlevée en même temps que le film de revêtement (5).
